(19)

Europäisches Patentamt
European Patent Office
Office européen des brevets

(11) **EP 2 264 815 A1**

(12) **EUROPEAN PATENT APPLICATION**
published in accordance with Art. 153(4) EPC

(43) Date of publication:
**22.12.2010 Bulletin 2010/51**

(21) Application number: **10748509.6**

(22) Date of filing: **03.03.2010**

(51) Int Cl.:
**H01M 4/525** $^{(2010.01)}$     **H01M 4/36** $^{(2006.01)}$

(86) International application number:
**PCT/JP2010/001445**

(87) International publication number:
**WO 2010/100910 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **06.03.2009 JP 2009053357**

(71) Applicant: **Panasonic Corporation**
**Kadoma-shi**
**Osaka 571-8501 (JP)**

(72) Inventors:
• **HOSOKAWA, Takashi**
**1-61 Shiromi 2-chome,**
**Chuo-ku,**
**Osaka-shi,**
**Osaka,**
**540-6207 (JP)**

• **OKADA, Yukihiro**
**1-61 Shiromi 2-chome,**
**Chuo-ku,**
**Osaka-shi,**
**Osaka,**
**540-6207 (JP)**
• **FUJITA, Hideaki**
**1-61 Shiromi 2-chome,**
**Chuo-ku,**
**Osaka-shi,**
**Osaka,**
**540-6207 (JP)**
• **ARIMOTO, Shinji**
**1-61 Shiromi 2-chome,**
**Chuo-ku,**
**Osaka-shi,**
**Osaka,**
**540-6207 (JP)**

(74) Representative: **TBK-Patent**
**Bavariaring 4-6**
**80336 München (DE)**

(54) **POSITIVE ELECTRODE ACTIVE MATERIAL FOR NONAQUEOUS ELECTROLYTE SECONDARY BATTERY, METHOD FOR PRODUCING SAME, AND NONAQUEOUS ELECTROLYTE SECONDARY BATTERY**

(57)    A positive electrode active material for a non-aqueous electrolyte secondary battery of the present invention includes composite oxide particles including lithium, nickel, and an element M, the element M being at least one of aluminum and cobalt. The composite oxide particles include primary particles and each particle of the primary particles includes a surface portion and an inner portion. A content of the element M in the surface portion is higher than a content of the element M in the inner portion, and a proportion of the primary particles relative to all of the composite oxide particles is 80 to 100 wt%. According to the invention, a positive electrode active material for a non-aqueous electrolyte secondary battery that has excellent cycle characteristics and storage characteristics and is suitable for use in a wide range of the state of charge and in a high-temperature environment and a non-aqueous electrolyte secondary battery using the same can be obtained.

F I G. 2

**Description**

Technical Field

The present invention relates to a positive electrode active material for a non-aqueous electrolyte secondary battery, a method for producing the same, and a non-aqueous electrolyte secondary battery using the same, and specifically relates to an improvement of a positive electrode active material used for a non-aqueous electrolyte secondary battery.

Background Art

Non-aqueous electrolyte secondary batteries such as lithium ion secondary batteries have a high operating voltage and a high energy density, and thus are put in practical use as a driving power source for various portable electronic devices such as mobile phones, notebook personal computers, and video camcorders. Usage of the non-aqueous electrolyte secondary batteries also expands as a motor driving power source for hybrid electric vehicles (HEVs) and the like.

Motor driving power sources are required to have high output characteristics. Specifically, in order to improve the acceleration performance, gradeability, and fuel consumption of HEVs, a current as large as 20 to 40C at an hour rate is necessary, although it continues for a short time. Such a large current is several ten times of a current required for a driving power source for general portable electronic devices.

Plug-in hybrid electric vehicles (PHEVs) that are being put into practical use in recent years to reduce the amount of greenhouse gas emissions can run only with electric power without using an engine, unlike conventional HEVs. Furthermore, the motor driving power source mounted on the PHEVs can be charged via a household power supply.

If a PHEV runs only with the electric power from the motor driving power source, the state of charge (SOC) of the motor driving power source therefor greatly deteriorates according to the travel distance of the PHEV. Batteries used as a motor driving power source for PHEVs are required to maintain a long travel distance of the PHEVs. Accordingly, such batteries are used in a wide range of the SOC, specifically, in the range where the SOC is 30 to 90%.

The SOC of non-aqueous electrolyte secondary batteries for HEVs depends on the control system of the HEVs. Such batteries are usually used in a comparatively narrow range of the SOC, specifically, in the range where the SOC is about 60% ± 10%.

As described above, since the motor driving power source for PHEVs is used in a wide range of the SOC, if the discharge capacity falls by, for example, repeating charge and discharge, the power source may not be able to maintain a long travel distance. Accordingly, the batteries used as the motor driving power source for PHEVs are required to show excellent cycle characteristics even in the case of being used in the wide range of the SOC.

Further, if non-aqueous electrolyte secondary batteries are subjected to a high-temperature environment for a long time, the internal resistance thereof tends to greatly increase. This is because a coating derived from a non-aqueous electrolyte is formed on the surface of a positive electrode active material in such a high-temperature environment. Also, an increase in the internal resistance causes deterioration of cycle characteristics of the batteries. Accordingly, especially in the case of using non-aqueous electrolyte secondary batteries as the motor driving power source for PHEVs, it is necessary to suppress formation of a coating derived from a non-aqueous electrolyte on the surface of a positive electrode active material, thereby suppressing an increase in the internal resistance of the non-aqueous electrolyte secondary batteries and deterioration of storage characteristics.

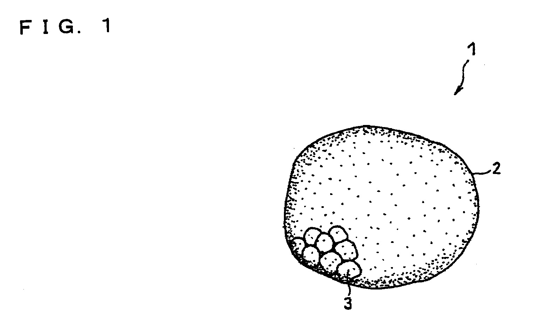

Generally, a positive electrode active material 1 of a non-aqueous electrolyte secondary battery is used in the state of secondary particles 2 that are each formed by agglomerating a plurality of primary particles 3, as shown in FIG 1.

Further, in the electrode material for non-aqueous secondary batteries described in Patent Document 1, a part of the surface of an active material or the entire surface thereof is covered with a compound containing at least aluminum and oxygen in order to have a higher level of safety while maintaining the discharge capacity and cycle characteristics.

Meanwhile, in a positive electrode active material for lithium secondary batteries described in Patent Document 2, a material in which most powder particles of a lithium transition metal composite oxide exist independently without forming agglomerations is used as a positive electrode active material, in order to improve cycle characteristics of lithium secondary batteries.

Citation List

Patent Document

Patent Document 1: Laid-Open Patent Publication No. 2003-257427
Patent Document 2: Laid-Open Patent Publication No. 2003-68300

Disclosure of the Invention

Problem to be Solved by the Invention

However, the positive electrode active material of a non-aqueous electrolyte secondary battery repeats expansion and contraction involved with absorption and desorption of lithium during charge and discharge, which generates stress in the grain boundary between primary particles, and thus secondary particles are likely to disintegrate. Accordingly, with the electrode material for non-aqueous secondary batteries described in Patent Document 1, repetitions of charge and discharge cause disintegration of the active material, which results in a decrease in storage characteristics of the batteries.

On the other hand, with the positive electrode active material for lithium secondary batteries described in Patent Document 2, it is possible to suppress a problem of disintegration of particles involved with repetitions of charge and discharge. However, when the battery is subjected to a high-temperature environment for a long time, a coating derived from an electrolyte is formed on the active material surface, which is likely to generate gas. Accordingly, the reactivity of the active material surface falls, and also the internal resistance of the battery increases, and thus the storage characteristics of the battery tend to deteriorate. In particular, there is a strong demand for the motor driving power source for PHEVs to maintain high output over a long period of time in a high-temperature environment, and thus the positive electrode active material for lithium secondary batteries described in Patent Document 2 is insufficient for such usage.

One aspect of the present invention provides a positive electrode active material for a non-aqueous electrolyte secondary battery that has excellent cycle characteristics and storage characteristics and is suitable for use in a wide range of the state of charge and in a high-temperature environment, and a non-aqueous electrolyte secondary battery using the same.

Means for solving the Problems

A positive electrode active material for a non-aqueous electrolyte secondary battery of the present invention includes composite oxide particles including lithium, nickel, and an element M, the element M being at least one of aluminum and cobalt, the composite oxide particles include primary particles, each particle of the primary particles includes a surface portion and an inner portion, a content of the element M in the surface portion is higher than a content of the element M in the inner portion, and a proportion of the primary particles relative to all of the composite oxide particles is 80 to 100 wt%.

A method for producing a positive electrode active material for a non-aqueous electrolyte secondary battery of the present invention includes the steps of mixing nickel-containing hydroxide particles including primary particles in a proportion of 80 to 100 wt%, an acidic solution including an element M, and a basic solution to generate an active material precursor including the nickel-containing hydroxide particles and a hydroxide including the element M adhering to the surface of each of the nickel-containing hydroxide particles, the element M being at least one of aluminum and cobalt, and mixing the active material precursor and a compound including lithium, followed by calcination, to generate composite oxide particles including primary particles, each particle of the primary particles including a surface portion and an inner portion, a content of the element M in the surface portion being higher than a content of the element M in the inner portion.

A non-aqueous electrolyte secondary battery of the present invention includes a positive electrode, a negative electrode, a separator for separating the positive electrode and the negative electrode from each other, and a non-aqueous electrolyte, and the positive electrode includes the positive electrode active material for a non-aqueous electrolyte secondary battery of the present invention.

While the novel features of the invention are set forth particularly in the appended claims, the invention, both as to organization and content, will be better understood and appreciated, along with other objects and features thereof, from the following detailed description taken in conjunction with the drawings.

Effects of the Invention

According to the present invention, it is possible to suppress an increase in the internal resistance of a battery especially when the battery is stored at a high temperature or repeatedly charged and discharged.

Brief Description of the Drawings

FIG 1 is a vertical cross-sectional view schematically showing a positive electrode active material 1 contained in a conventional non-aqueous electrolyte secondary battery.

FIG 2 is a vertical cross-sectional view showing an example of a non-aqueous electrolyte secondary battery of the present invention.

Best Mode for Carrying Out the Invention

A positive electrode active material for a non-aqueous electrolyte secondary battery of the present invention includes composite oxide particles including lithium, nickel, and an element M (M represents at least one of aluminum and cobalt).

The above composite oxide particles may include other elements such as, for example, a metallic element, a semimetal element, and a nonmetallic element, other than lithium, nickel, the element M, and oxygen. The proportion of the element M in the composite oxide particles may be determined from a viewpoint of preventing a decrease in the capacity of the positive electrode active material and suppressing an increase in the internal resistance of the battery during storage (especially during storage in a high-temperature environment). In the composite oxide particles, the proportion of the element M relative to the total amount of metallic elements other than lithium may be, for example, 1 to 50 mol%, preferably 2 to 40 mol%, or more preferably about 3 to 35 mol%.

Examples of the above composite oxide include a compound represented by the following general formula (1).

$$Li_xNi_yMzMe_{1-(y+z)}O_{2+\delta} \qquad (1)$$

In the general formula (1), x represents the atomic ratio of lithium (Li) and is, for example, 0.9 to 1.3, preferably 1 to 1.2, or more preferably 1 to 1.1. The value of x changes according to the extent of charge and discharge.

y represents the atomic ratio of nickel (Ni) and is, for example, 0.3 to 1.1, preferably 0.4 to 1, or more preferably 0.45 to 0.9.

M represents at least one element of aluminum (Al) and cobalt (Co). z represents the atomic ratio of M.

Further, the atomic ratio z of the element M is, for example, 0.01 to 0.5, preferably 0.02 to 0.25, or more preferably 0.03 to 0.2.

Me represents an element that is different from Li, Ni, M, and oxygen (O), and specific examples thereof include metallic elements such as Mn, Mg, Zn, Fe, Cu, Mo, and Zr, semimetal elements such as B, and nonmetallic elements such as P and S. One of these elements may be included, or two or more of those may be included.

$\delta$ represents an oxygen deficiency or an oxygen excess. Ordinarily, the oxygen deficiency or oxygen excess is $\pm 1\%$ of the stoichiometric composition. Specifically, the value represented by $\delta$ is -0.01 or more and +0.01 or less.

The amount of each element included in the positive electrode active material can be measured using a conventional measurement method, namely, an inductively coupled plasma (ICP) emission spectrometry, for example.

Ordinarily, the composite oxide particles include primary particles and secondary particles that are each formed by agglomeration of primary particles. In the present specification, a primary particle refers to a particle formed by a single crystallite (a crystal grain). Accordingly, a grain boundary does not exist in a primary particle. Further, a secondary particle refers to a particle formed by agglomeration of plural primary particles.

In the positive electrode active material for a non-aqueous electrolyte secondary battery of the present invention, the composite oxide particles include primary particles having the element M content higher in the surface portion compared to that in the inner portion. Accordingly, in the case of forming a positive electrode of a non-aqueous electrolyte secondary battery using this positive electrode active material, even when this positive electrode is stored in a high-temperature environment, it is possible to remarkably suppress formation of a coating derived from a non-aqueous electrolyte on the surface of the positive electrode active material while maintaining the capacity. Accordingly, by using a non-aqueous electrolyte secondary battery including the above positive electrode, it is possible to suppress a reduction in the lithium ion absorbing and desorbing capability in a high-temperature environment, and as a result, it is possible to suppress an increase in the internal resistance of the battery during storage, thereby improving storage characteristics of the battery.

Further, the positive electrode active material for a non-aqueous electrolyte secondary battery is configured such that for the purpose of improving various characteristics thereof, individual primary particles have a higher content of the element M in the particle surface portion than that in the particle inner portion, rather than a covering of aluminum or cobalt being formed on the surface of the secondary particles in the composite oxide. Consequently, the effect of suppressing formation of a coating derived from the non-aqueous electrolyte due to storage in a high-temperature environment is achieved by the above individual primary particles of the positive electrode active material.

In such primary particles, although it is sufficient that Rs-Ri representing a difference between a content Rs (mol%) of the element M relative to all the metallic elements other than lithium in the surface portion and a content Ri (mol%) of the element M relative to all the metallic elements other than lithium in the inner portion is a positive value, the value of the difference is preferably 2 or more (e.g., 3 to 20), or more preferably 5 to 15.

In this specification, the surface portion of the primary particles included in the composite oxide particles refers to a region where depth from the particle surface is 20% or less of the minimal diameter of the particles. On the other hand, the inner portion of the primary particles included in the composite oxide particles specifically refers to a region where depth from the particle surface exceeds 20% of the minimal diameter of the particles.

If the above difference Rs-Ri is too small, there are cases where the effect of the element M included in the primary particles cannot be sufficiently obtained. The effect of suppressing an increase in the internal resistance of the battery during storage may be sufficiently and more effectively achieved by setting as appropriate the difference between the element M content in the surface portion of the primary particles and that in the inner portion thereof, while maintaining the capacity of the positive electrode active material.

With regard to the primary particles, the element M content Rs in the surface portion thereof relative to all the metallic elements other than lithium can be selected from the range of, for example, about 1 to 55 mol%, and is preferably 5 to 50 mol% (e.g., 7 to 40 mol%), or more preferably 10 to 30 mol%.

It is possible to more effectively suppress formation of a coating derived from the non-aqueous electrolyte on the surface of the positive electrode active material, by setting the element M content Rs in the particle surface portion within the above range. If the element M content in the surface portion is too low, there are cases where the effect of suppressing formation of a coating derived from the non-aqueous electrolyte on the surface of the positive electrode active material is reduced. On the contrary, if the element M content in the surface portion is too high, a nickel content may relatively decrease, thereby decreasing the capacity of the positive electrode active material.

With regard to the primary particles, the element M content Ri in the inner portion thereof can be selected from the range of, for example, 40 mol% or less (0 to 40 mol%) of all the metallic elements other than lithium, and is preferably, 0.1 to 35 mol%, or more preferably 0.5 to 15 mol% (e.g., 3 to 8 mol%).

An increase in the internal resistance of the battery during storage can be more effectively suppressed by setting the element M content Ri in the particle inner portion within the above range, while maintaining the capacity of the positive electrode active material. If the element M content in the inner portion is too high, it may not be possible to provide a sufficient difference (concentration gradient) between the element M content in the surface portion and that in the inner portion, or the element M content in the primary particles in the above composite oxide may be high, thereby decreasing the capacity of the positive electrode active material.

The composite oxide particles include many primary particles having the element M content in the surface portion higher than the element M content in the inner portion.

The proportion of such primary particles is 80 wt% or more (e.g., 80 to 100 wt%), preferably 90 wt% or more (e.g., 90 to 99 wt%), or more preferably 95 wt% or more (e.g., 95 to 98 wt%) of all the composite oxide particles. Further, a content of the primary particles may be in a range of 80 to 95 wt% (e.g., 81 to 90 wt%) of all the composite oxide particles.

If the primary particle content relative to all the composite oxide particles is too low, a relative proportion of the secondary particles becomes higher, and in a non-aqueous electrolyte secondary battery, the secondary particles disintegrate during charge and discharge, and the proportion of the element M contained in the surface portion of the primary particles becomes relatively low. Accordingly, it is not possible to effectively prevent formation of a coating derived from the non-aqueous electrolyte on the surface of the positive electrode active material, and problems such as an increase in the internal resistance of the battery during storage, an increase in the internal resistance of the battery involved with repetitions of charge and discharge, and deterioration of cycle characteristics may arise.

The configuration (primary particles, secondary particles, and the like) of the composite oxide particles can be observed using, for example, a scanning electron microscope (SEM), a scanning ion microscope (SIM), or the like. For example, in the case of using an SEM, a predetermined region of composite oxide particles or the cross section of an electrode plate using these is observed using the SEM, and a primary particle and a secondary particle can be distinguished from each other based on the presence of a grain boundary and an agglomeration. Then, the area rates of the primary particles and the secondary particles are calculated, and the weight proportion of the primary particles in the composite oxide particles can be calculated based on the area rates.

Concentration distribution of elements in the composite oxide particles (in the particle cross section, or the like) can be measured using a conventional measuring means such as an EPMA (electron probe micro analyzer), for example. More specifically, it is possible to analyze elements in a region of about $\phi 1 \, \mu m$ of the cross section of a primary particle using the EPMA. In the EPMA analysis, point analysis is performed on several points each in the surface portion and the inner portion of the particle, average values are calculated, the element content in the surface portion and that in the inner portion are obtained as average values. A sample for cross section measurement can be prepared by performing, for example, polishing or ion etching (ion etching using an argon laser, or the like), which are known cross section forming methods, on a sample obtained by solidifying particles using resin or an electrode plate using particles, for example.

In the positive electrode active material for a non-aqueous electrolyte secondary battery, the volume average particle diameter of the primary particles is, for example, 1 to 10 $\mu$m, preferably 1.2 to 8 $\mu$m, or more preferably 1.5 to 7 $\mu$m (e.g., 2 to 5 $\mu$m), from a viewpoint of packing density of the positive electrode active material, for instance.

If the volume average particle diameter of the primary particles is too small, even in the case where a positive electrode for a non-aqueous electrolyte secondary battery is formed using the composite oxide particles, the density of the positive electrode active material may become low, and consequently the capacity density of the battery may decrease. Further, if the volume average particle diameter of the primary particles is too small, the specific surface area becomes larger, which leads to a problem that the amount of binder used when producing an electrode needs to be increased. On the contrary, if the volume average particle diameter of the primary particles is too large, in the case where a non-aqueous electrolyte secondary battery is produced using the composite oxide particles, sufficient output may not be obtained.

The volume average particle diameter of the composite oxide particles can be measured with a laser diffraction scattering method using a laser diffraction particle size distribution analyzer, for example.

A positive electrode active material for a non-aqueous electrolyte secondary battery of the present invention can be produced by executing, for example, the steps of:

mixing nickel-containing hydroxide particles including primary particles in a proportion of 80 to 100 wt%, an acidic solution including an element M, and a basic solution to generate an active material precursor including the nickel-containing hydroxide particles and a hydroxide including the element M adhering to the surface of each of the nickel-containing hydroxide particles, the element M being at least one of aluminum and cobalt; and

mixing the active material precursor and a compound containing lithium, followed by calcination, to generate composite oxide particles including primary particles, each particle of the primary particles comprising a surface portion and an inner portion, a content of the element M in the surface portion being higher than a content of the element M in the inner portion.

According to the above production method, the positive electrode active material for a non-aqueous electrolyte secondary battery of the present invention can be efficiently produced. Further, in the primary particles in the composite oxide including lithium, nickel, and the element M, the metal M can be distributed effectively, the content thereof being higher in the surface portion.

As the nickel-containing hydroxide particles used as the raw material in the precursor generation step, it is possible to utilize particles in which agglomeration of the primary particles included in the hydroxide is released with a conventional method, thereby adjusting the proportion of the primary particles, for instance. For example, the raw material in which the proportion of the primary particles relative to all the particles has been adjusted to 80 wt% or more (80 to 100 wt%) by deagglomerating a nickel-containing hydroxide may be used in the precursor generation step.

The production method of the present invention may further include, prior to the precursor generation step, a deagglomeration step in which a nickel-containing hydroxide is deagglomerated, and thereby the proportion of the primary particles relative to all the particles of this nickel-containing hydroxide is adjusted to 80 to 100 wt%.

Deagglomeration can be performed by applying mechanical stress to the nickel-containing hydroxide so as to be pulverized. The proportion of primary particles may be further adjusted by ordinarily performing classification thereon after pulverizing. In this way, the proportion of the primary particles relative to all the particles in the nickel-containing hydroxide is adjusted to 80% or more on the basis of the weight.

Application of mechanical stress can be performed using a conventional means such as a dry/wet ball mill, a vibrating mill, or a jet mill, for example. Specifically, it is sufficient to pulverize the nickel-containing hydroxide using a planetary ball mill in the presence of media such as zirconia beads, for example.

As the nickel-containing hydroxide used in this deagglomeration (step) as the raw material, ordinarily, a nickel-containing hydroxide including primary particles grown comparatively large is used in many cases.

Examples of the nickel-containing hydroxide serving as the material include, but are not limited to, a nickel-cobalt composite hydroxide, a nickel-manganese composite hydroxide, a nickel-aluminum composite hydroxide, a nickel-manganese-cobalt composite hydroxide, and a nickel-cobalt-aluminum composite hydroxide.

Further, an element other than nickel, manganese, aluminum, and cobalt included in the nickel-containing hydroxide is selected as appropriate depending on the type of the target positive electrode active material. Examples of such an element include magnesium, zinc, iron, copper, molybdenum, zirconium, phosphorus, boron, and sulfur.

In the precursor generation step, nickel-containing hydroxide particles, an acidic solution including the element M, and a basic solution are mixed, and thus a hydroxide including the element M adheres to the surface of the nickel-containing hydroxide particles, thereby obtaining an active material precursor. Further, the nickel-containing hydroxide particles and the acidic solution may be mixed, and a basic solution may be added to the obtained mixture.

The obtained solid (active material precursor) may be further washed and dried, and then subjected to the next step.

In the precursor generation step, as the acidic solution including the element M, an acidic solution containing a compound of the element M, such as, for example, an aqueous solution containing an inorganic acid salt of the element M can be used, although not limited thereto. Among such aqueous solutions, industrially, an aqueous solution of a sulfate of the element M such as, for example, an aqueous aluminum sulfate solution, an aqueous cobalt sulfate solution, or a mixed aqueous solution of aluminum sulfate and cobalt sulfate is used in many cases.

The concentration of a compound including the element M in the acidic solution may be, in terms of the element M, about 0.1 to 5 mol/L, preferably about 0.5 to 3 mol/L, or more preferably about 0.7 to 2 mol/L. The amount of the acidic solution to be used with respect to nickel-containing hydroxide particles can be selected as appropriate according to the ratio of elements in the obtained composite oxide, for instance.

As the basic solution, for example, a solution (aqueous solution or the like) of an inorganic base such as sodium hydroxide or potassium hydroxide can be used.
The concentration of the basic solution may be about 0.1 to 5 mol/L, preferably about 0.5 to 3 mol/L, or more preferably about 0.7 to 2 mol/L. The amount of the basic solution to be used can be selected as appropriate in a range of not preventing a hydroxide including the element M from adhering to the surface of the nickel-containing hydroxide particles.

In the composite oxide generation step, the mixture of an active material precursor and a compound including lithium is heat-treated.
The heat treatment temperature and time can be selected as appropriate from a viewpoint of concentration distribution of the element M in the primary particles and/or the fixability of the element M to the primary particles (consequently, the fixability of the element M to the positive electrode active material, and the resistance of the battery). The heat treatment temperature can be selected from, for example, the range of about 700 to 1100°C, and is preferably 740 to 1050°C, or more preferably 750 to 1000°C (e.g., 750 to 900°C). Further, the heat treatment time is, for example, 5 to 24 hours, preferably, 8 to 20 hours, or more preferably, 10 to 18 hours.

As the compound including lithium, an inorganic compound of an oxide, a hydroxide, or an inorganic acid salt (carbonate, sulfate, or the like) can be given as an example. Specific examples of the inorganic compound including lithium include lithium hydroxide, lithium carbonate, lithium oxide, lithium oxyhydroxide, and lithium sulfate.

By executing the composite oxide generation step, it is possible to obtain a composite oxide particle including lithium, nickel, and the element M, with primary particles having the element M content in the surface portion higher than the element M content in the inner portion.

In the composite oxide generation step, if the heat treatment temperature and time are optimized, a positive electrode active material can be obtained mostly in the state in which agglomeration does not occur, and the particle diameter of the active material precursor is maintained. On the other hand, if agglomeration occurs by heat treatment, it is sufficient to again perform the deagglomeration step after the composite oxide generation step.

In the composite oxide generation step, as the molar ratio of elements other than oxygen and hydrogen in the active material precursor to lithium in a compound including lithium, the mixing ratio of the active material precursor and the compound including lithium can be selected from, for example, the range of about 1:0.9 to 1:2, and is preferably 1: 0.95 to 1:1.5, or more preferably 1:1 to 1:1.2.

In the precursor generation step, the amount of the element M included in the composite oxide particles can be adjusted as appropriate based on a mixing ratio of the transition metal hydroxide to the acidic solution including the element M, for instance.

A non-aqueous electrolyte secondary battery of the present invention includes a positive electrode including a positive electrode active material, a negative electrode including a negative electrode active material, a separator disposed between the positive electrode and the negative electrode, and a non-aqueous electrolyte.

The positive electrode active material includes composite oxide particles including lithium, nickel, and the element M, and the composite oxide particles include primary particles having the element M content in the surface portion higher than the element M content in the inner portion.

It is sufficient that the proportion of such primary particles included in the positive electrode active material is 80 to 100 wt%. In the positive electrode, primary particles may agglomerate into secondary particles (agglomerates).

According to the above non-aqueous electrolyte secondary battery, it is possible to suppress a reduction in the lithium ion absorbing and desorbing capability in the positive electrode especially in a high-temperature environment, and as a result, it is possible to suppress an increase in the internal resistance of the battery during storage and improve storage characteristics of the battery. Furthermore, it is possible to suppress problems such as an increase in the internal resistance of the battery involved with repetitions of charge and discharge, and deterioration of cycle characteristics. Thus, according to the present invention, a non-aqueous electrolyte secondary battery having excellent cycle characteristics and storage characteristics can be provided.

The non-aqueous electrolyte secondary battery of the present invention can be used for various secondary battery usages. For example, the battery can be suitably used especially as a power source for plug-in hybrid electric vehicles. If the battery is used for this usage, the capacity of the non-aqueous electrolyte secondary battery may be, for example, about 5 Ah to 40 Ah, but preferably 10 Ah to 30 Ah in ordinary cases.

Further, the non-aqueous electrolyte secondary battery of the present invention has excellent cycle characteristics and storage characteristics as described above, and thus can be used as a motor driving power source for a hybrid electric vehicle and a driving power source for various consumer portable electronic devices, for example. In the case of using the battery as the motor driving power source, the capacity of the non-aqueous electrolyte secondary battery may be, for example, about 2 Ah to 10 Ah, but preferably 3 Ah to 8 Ah in ordinary cases. Further, in the case of using the battery as the driving power source for various portable electronic devices, the capacity of the non-aqueous electrolyte secondary battery may be, for example, about 1 Ah to 10 Ah, but preferably 2 Ah to 4 Ah in ordinary cases.

Below is a description of constituent elements other than the positive electrode active material of the non-aqueous electrolyte secondary battery of the present invention.
The positive electrode includes a positive electrode current collector and a positive active material layer supported thereon. The positive active material layer can include the positive electrode active material for a non-aqueous electrolyte secondary battery of the present invention, and a conductive agent and a binder as necessary.

The negative electrode includes a negative electrode current collector and a negative electrode active material layer supported thereon. The negative electrode active material layer can include the negative electrode active material, and a binder and a conductive agent as necessary.

Various materials known in the field of the present invention can be used as the material that constitutes the positive electrode current collector. Specifically, stainless steel, aluminum, titanium, or the like can be used.

Various materials known in the field of the present invention can be used as the material that constitutes the negative electrode current collector. Specifically, copper, nickel, stainless steel, or the like can be used.

Examples of the negative electrode active material include graphites such as natural graphite (flake graphite and the like) and artificial graphite; carbon blacks such as acetylene black, Ketjen Black, channel black, furnace black, lamp black, and thermal black; a carbon fiber; a metal fiber; an alloy; a lithium metal; a tin compound; and a silicon compound. These materials may be used alone or in a combination of two or more.

As the binder used for the positive and negative electrodes, for example, polyethylene, polypropylene, polytetrafluoroethylene (PTFE), polyvinylidene fluoride (PVDF), a tetrafluoroethylene-hexafluoropropylene copolymer (FEP), or a vinylidene fluoride-hexafluoropropylene copolymer is used.

Examples of the conductive agent used for the positive and negative electrodes include graphites such as natural graphite (flake graphite and the like), artificial graphite, and expanded graphite; carbon blacks such as acetylene black, Ketjen Black, channel black, furnace black, lamp black, and thermal black; conductive fibers such as a carbon fiber and a metal fiber; metal powders such as copper powder and nickel powder; and organic conductive materials such as a polyphenylene derivative. These may be used alone or in a combination of two or more.

In general, the thickness of the positive electrode current collector and the negative electrode current collector is 1 to 500 $\mu$m, preferably 2 to 300 $\mu$m, or more preferably 3 to 200 $\mu$m, although not limited thereto.

The non-aqueous electrolyte can include a non-aqueous solvent and a solute dissolved therein, for example. As the non-aqueous solvent, for example, ethylene carbonate, propylene carbonate, dimethyl carbonate, diethyl carbonate, and methyl ethyl carbonate can be used, although not limited thereto. These non-aqueous solvents may be used alone or in a combination of two or more.

Examples of the solute include $LiPF_6$, $LiBF_4$, $LiCl_4$, $LiAlCl_4$, $LiSbF_6$, LiSCN, LiCl, $LiCF_3SO_3$, $LiCF_3CO_2$, $Li(CF_2SO_2)_2$, $LiAsF_6$, $LiN(CF_3SO_2)_2$, $LiB_{10}Cl_{10}$, and imides. These may be used alone or in a combination of two or more.

As the material that constitutes the separator, a material known in the field can be used. As such a material, polyethylene, polypropylene, a mixture of polyethylene and polypropylene, or a copolymer of ethylene and propylene can be used.

In the following, the present invention will be described with reference to examples. However, the present invention is not limited to the following examples.

Examples

Example 1

(1) Production of positive electrode

First, a positive electrode active material was produced as follows. A nickel-cobalt composite hydroxide ($Ni_{0.85}Co_{0.15}(OH)_2$) and N-methyl-2-pyrrolidone (NMP) were mixed such that the weight ratio of the nickel-cobalt composite hydroxide to NMP was 1:2. Then, the mixture was put in a planetary ball mill together with zirconia beads having a diameter of 2 mm, and pulverized and classified into primary particles (deagglomeration step).

The particles of the nickel-cobalt composite hydroxide obtained in this deagglomeration step had a volume average particle diameter of 2 $\mu$m, which was measured using a laser diffraction particle size distribution analyzer.

Further, as a result of the observation using an SEM, 80 wt% or more of the particles were primary particles.

Next, while stirring the deagglomerated nickel-cobalt composite hydroxide in water, an aqueous aluminum sulfate solution (concentration of 1 mol/L) and an aqueous sodium hydroxide solution (concentration of 1 mol/L) were added dropwise thereto. Then, the solid was separated from the obtained mixture, washed, and dried to give a nickel-cobalt composite hydroxide (active material precursor) with its surface covered with aluminum hydroxide (precursor generation step). In the particles of the active material precursor obtained in this precursor generation step, the molar ratio of the total amount of nickel and cobalt to aluminum was 93:7.

Furthermore, the active material precursor obtained in the precursor generation step was mixed with lithium hydroxide (LiOH), so that, in the resultant mixture, the molar ratio of the total amount of metallic elements contained in the active material precursor (elements other than oxygen and hydrogen in the active material precursor) to lithium contained in the lithium hydroxide was 1:1.05.

The resultant mixture was calcined at 760°C for 12 hours in an oxygen atmosphere (calcination step) to give a composite oxide (positive electrode active material No.1).

The composition of the positive electrode active material No.1 was $Li(Ni_{0.85}Co_{0.15})_{0.93}Al_{0.07}O_2$.

As a result of analyzing the concentration distribution of aluminum (element M) in the cross section of the obtained primary particles in the positive electrode active material No.1 using an EPMA, the aluminum content Rs in the particle surface portion was 13 mol%, and the aluminum content Ri in the particle inner portion was 1 mol%. In other words, the aluminum content in the particle surface portion was higher than the aluminum content in the particle inner portion. Further, "Rs-Ri" representing the difference between Rs and Ri was 12.

Further, as a result of observation of this positive electrode active material No.1 using the SEM, 85 wt% of the particles were primary particles. The particle diameter of the positive electrode active material No.1 (primary particles) was 2 $\mu$m as the volume average particle diameter measured using the laser diffraction particle size distribution analyzer.

Further, the amount of aluminum contained in the positive electrode active material No.1 was 7 mol% of the total amount of metallic elements contained in the positive electrode active material.

Next, a positive electrode was produced as follows using the positive electrode active material No.1.

A positive electrode mixture paste was obtained by mixing 85 parts by weight of a positive electrode active material 1,10 parts by weight of carbon powder serving as a conductive agent, and an N-methyl-2-pyrrolidone (hereinafter, abbreviated as "NMP") solution of polyvinylidene fluoride (hereinafter, abbreviated as "PVDF") serving as a binder. The amount of PVDF added was 5 parts by weight.

The resultant positive electrode mixture paste was applied to aluminum foil having a thickness of 15 $\mu$m (positive electrode current collector), dried, and rolled to produce a positive electrode having a thickness of 100 $\mu$m.

(2) Production of negative electrode

A negative electrode was produced as follows.

A negative electrode mixture paste was obtained by mixing 95 parts by weight of artificial graphite powder serving as a negative electrode active material and an NMP solution of PVDF serving as a binder. The amount of PVDF added was 5 parts by weight.

The resultant negative electrode mixture paste was applied to copper foil having a thickness of 10 $\mu$m (negative electrode current collector), dried, and rolled, to produce a negative electrode having a thickness of 110 $\mu$m.

(3) Preparation of non-aqueous electrolyte

A non-aqueous electrolyte was prepared by dissolving lithium hexafluorophosphate ($LiPF_6$) at a concentration of 1.5 mol/L in a mixed solvent containing ethylene carbonate, ethyl methyl carbonate, and dimethyl carbonate (DMC: boiling point of 97°C) at a volume ratio of 1:1:8.

(4) Production of sealed secondary battery

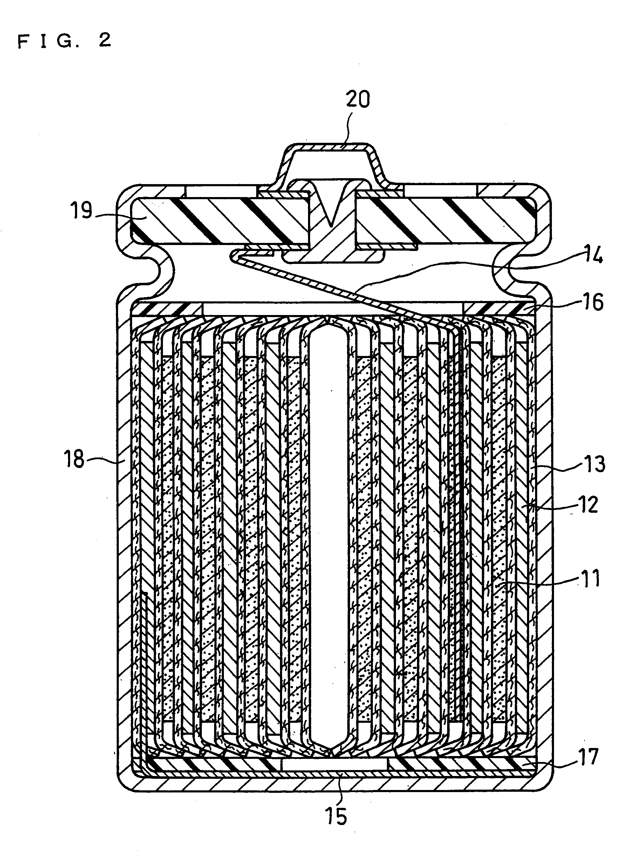

A cylindrical sealed secondary battery as shown in FIG 2 was produced.

A separator 13 having a thickness of 25 $\mu$m was disposed between the positive electrode 11 and the negative electrodes 12 to obtain a laminate. The resultant laminate was wound spirally to produce a cylindrical electrode plate group having 25.0 mm$\phi$. Then, the resultant electrode plate group was housed in a battery case 18 made of nickel-plated iron having an inside diameter of 25.5 mm$\phi$ and a thickness of 0.25 mm, together with 15 mL of the non-aqueous electrolyte.

Next, an end of a positive electrode lead 14 made of aluminum was connected to the back surface of a sealing plate 19 that is electrically connected to a positive electrode terminal 20. Further, an end of a negative electrode lead 15 made of copper was connected to a bottom portion of the battery case 18. An upper insulating plate 16 and a lower insulating plate 17 were respectively provided above and under the electrode plate group. Furthermore, the open end portion of the battery case 18 was crimped onto the sealing plate 19, thereby sealing the battery case 18, and thus a non-aqueous electrolyte secondary battery was obtained. The design capacity of the sealed secondary battery was set to 2000 mAh.

Comparative Example 1

A nickel-cobalt-aluminum composite hydroxide (($(Ni_{0.85}Co_{0.15})_{0.93}Al_{0.07}(OH)_2$) and NMP were mixed such that the weight ratio of the nickel-cobalt-aluminum composite hydroxide to NMP was 1:2. Then, the mixture was put in a planetary ball mill together with zirconia beads having a diameter of 2 mm, and pulverized and classified into primary particles (deagglomeration step).

The particles of the nickel-cobalt-aluminum composite hydroxide obtained in this deagglomeration step had a volume average particle diameter of 2 $\mu$m, which was measured using a laser diffraction particle size distribution analyzer. Further, as a result of the observation using an SEM, 80 wt% or more of the particles were primary particles.

Next, the deagglomerated nickel-cobalt-aluminum composite hydroxide and lithium hydroxide were mixed. At that time, the molar ratio of the total amount of Ni, Co, and Al in the composite hydroxide to lithium was 1:1.05.

The resultant mixture was calcined at 760°C for 12 hours in an oxygen atmosphere to give a composite oxide (positive electrode active material No.2).

The composition of the positive electrode active material No.2 was $Li(Ni_{0.85}Co_{0.15})_{0.93}Al_{0.07}O_2$. As a result of analyzing concentration distribution of the elements in the cross section of the particles in the positive electrode active material No.2 using an EPMA, the aluminum (element M) content Rs in the particle surface portion was 7 mol%, and the aluminum content Ri in the particle inner portion was 7 mol%. In other words, the aluminum content in the particle surface portion was almost the same as the aluminum content in the particle inner portion (Rs-Ri=0), and aluminum was uniformly dissolved in the particles.

Further, as a result of observation of this positive electrode active material No.2 using the SEM, 83 wt% of the particles were primary particles. The particle diameter of the positive electrode active material No.2 was 2 $\mu$m as the volume average particle diameter measured using the laser diffraction particle size distribution analyzer.

Then, a non-aqueous electrolyte secondary battery was produced in the same manner as in Example 1 except that the positive electrode active material No.2 was used.

Comparative Example 2

In the deagglomeration step of Comparative Example 1, the raw material and the conditions of pulverization and classification were adjusted, and a nickel-cobalt-aluminum composite hydroxide (($(Ni_{0.85}Co_{0.15})_{0.93}Al_{0.07}(OH)_2$) made of secondary particles was produced. Then, the resultant nickel-cobalt-aluminum composite hydroxide and lithium hydroxide were mixed. At that time, the molar ratio of the total amount of Ni, Co, and Al contained in the nickel-cobalt-aluminum composite hydroxide to lithium was 1:1.05.

The resultant mixture was calcined at 760°C for 12 hours in an oxygen atmosphere (calcination step) to give a composite oxide (positive electrode active material No.3).

The composition of the positive electrode active material No.3 was $Li(Ni_{0.85}Co_{0.15})_{0.93}Al_{0.07}O_2$. As a result of analyzing concentration distribution of the elements in the cross section of the particles in the positive electrode active material No.3 using an EPMA, the aluminum (element M) content Rs in the particle surface portion and the aluminum content Ri in the particle inner portion were almost the same, and aluminum was uniformly dissolved in the particles.

Further, as a result of observation of this positive electrode active material No.3 using an SEM, 98 wt% of the particles were secondary particles. The particle diameter of the positive electrode active material No.3 was 2 $\mu$m as the volume average particle diameter measured using a laser diffraction particle size distribution analyzer.

Then, a non-aqueous electrolyte secondary battery was produced in the same manner as in Example 1 except that the positive electrode active material No.3 was used.

Evaluation

(1) Cycle characteristics

Cycle characteristics of the non-aqueous electrolyte secondary batteries obtained in Example 1 and Comparative Examples 1 and 2 were evaluated as follows.

The batteries were charged with a constant current of 2000 mA at 25°C until the battery voltage reached 4.2 V. Then, the batteries were charged with a constant voltage of 4.2 V until the current value reached 100 mA. The charged batteries were discharged with a current of 2000 mA until the battery voltage dropped to 2.5 V. This charge/discharge cycle was repeated, and the proportion of the discharge capacity in the 500th cycle to the discharge capacity in the first cycle was taken as the capacity retention rate [%]. Table 1 shows the results.

(2) Storage characteristics

High-temperature storage characteristics of the non-aqueous electrolyte secondary batteries obtained in Example 1 and Comparative Examples 1 and 2 were evaluated as follows.

The batteries were charged with a constant current of 2000 mA at 25°C until the battery voltage reached 4.2 V, and then charged with a constant voltage of 4.2 V until the current value reached 100 mA. The internal resistance (initial internal resistance) of each of the batteries was measured after charging.

Furthermore, other batteries obtained in the example and the comparative examples were charged in the same manner as described above. The charged batteries were stored for 20 days in a 60°C environment. After storage, the internal resistance (internal resistance after storage) of each of the batteries was measured in the same manner as described above.

The rate of increase in an internal resistance R [$\Omega$] after storage to an initial internal resistance $R_0$ [$\Omega$] was taken as the rate of increase in the internal resistance. Table 2 shows the results. A rate of increase in the internal resistance $\Delta R$ [%] was obtained using the following formula.

$$\Delta R = [(R - R_0)/R_0] \times 100$$

Below, a method for measuring the internal resistance R [$\Omega$] is described.
The batteries were charged with a current of 2000 mA (2 A) at 25°C, and the charging ended when the batteries were charged to 1000 mAh. The charged batteries were left for one hour, and a voltage $V_0$ [V] of the batteries at this time was measured. After that, the batteries were discharged with a current of 2000 mA at 25°C. A voltage $V_1$ [V] of the batteries after ten seconds from the start of discharge was measured. The internal resistance R [$\Omega$] was obtained using the following formula.

$$R = (V_0 - V_1)/2$$

Table 1 shows the positive electrode active materials that were used and the features thereof.
[Table 1]

| Positive electrode active material: Li $(Ni_{0.85}Co_{0.15})_{0.93}Al_{0.07}O_2$ | | | Capacity retention rate [%] | Rate of increase in internal resistance $\Delta R$[%] |
|---|---|---|---|---|
| | No. | Details | | |
| Ex. 1 | No. 1 | Deagglomerated before precursor generation step Al content Particle surface portion > Particle inner portion | 91 | 9 |
| Comp. Ex. 1 | No 2 | Deagglomerated before precursor generation step Al content Particle surface portion ≈ Particle inner portion | 90 | 23 |

(continued)

| | | Positive electrode active material: Li $(Ni_{0.85}Co_{0.15})_{0.93}Al_{0.07}O_2$ | | Capacity retention rate [%] | Rate of increase in internal resistance $\Delta R[\%]$ |
|---|---|---|---|---|---|
| | No. | Details | | | |
| Comp. Ex. 2 | No. 3 | Not deagglomerated before precursor generation step Al content Particle surface portion $\approx$ Particle inner portion | | 75 | 24 |

As shown in Table 1, the non-aqueous electrolyte secondary battery of Example 1 using the positive electrode active material No.1 (primary particles) in which the positive electrode active material is made of primary particles, and the aluminum content in the particle surface portion is higher than the aluminum content in the particle inner portion had favorable cycle characteristics and favorable storage characteristics.

Further, since the positive electrode active material No.1 of Example 1 has a positive electrode active material constituted by primary particles, even in the case where the positive electrode active material expanded and contracted during the charge/discharge cycles, it was possible to suppress the influence of the volume change of the positive electrode active material. Consequently, it seems that the capacity retention rate after the charge/discharge cycles was high.

Furthermore, in the positive electrode active material No.1 of Example 1, the aluminum content in the surface portion of the primary particles is higher than that in the inner portion thereof. By setting the aluminum content higher on the surface side of the positive electrode active material in this way, it is possible to suppress formation of a coating derived from the non-aqueous electrolyte on the surface of the positive electrode active material even in the case of storage in a high-temperature environment. Accordingly, it seems that an increase in the internal resistance of the battery during storage at a high temperature was suppressed, thereby improving the storage characteristics of the battery.

On the other hand, with the non-aqueous electrolyte secondary battery using the positive electrode active material No.2 of Comparative Example 1 in which although the positive electrode active material is constituted by primary particles, aluminum atoms are uniformly dissolved in the primary particles, the internal resistance after storage at a high temperature greatly increased. It seems that this is because when the battery was stored in a high-temperature environment, a coating derived from the non-aqueous electrolyte was formed on the surface of the positive electrode active material No.2, and consequently the lithium ion absorbing and desorbing capability was reduced, which increased the internal resistance of the battery.

Further, in Comparative Example 2, the battery was greatly deteriorated after the charge/discharge cycles and also after storage at a high temperature. In the positive electrode active material No.3 of Comparative Example 2, the positive electrode active material is made of secondary particles, and aluminum atoms are uniformly dissolved in the secondary particles. Since the positive electrode active material No.3 is constituted by secondary particles, it seems that separation of the primary particles (secondary particle crack) occurred due to expansion and contraction of the positive electrode active material during the charge/discharge cycles, which decreased the capacity retention rate after cycles. Further, it seems that the cause of an increase in the internal resistance after storage is the formation of a coating derived from the non-aqueous electrolyte on the surface of the positive electrode active material, and consequently the lithium ion absorbing and desorbing capability was reduced, as with the case of Comparative Example 1.

Example 2

(1) Production of positive electrode plate

First, a positive electrode active material was produced as follows. A nickel-manganese composite hydroxide $(Ni_{0.5}Mn_{0.5})(OH)_2$ and NMP were mixed such that the weight ratio of the nickel-manganese composite hydroxide to NMP was 1:2. Then, the mixture was put in a planetary ball mill together with zirconia beads having a diameter of 2 mm, and pulverized and classified into primary particles (deagglomeration step).

The particles of the nickel-manganese composite hydroxide obtained in this deagglomeration step had a volume average particle diameter of 2 $\mu$m, which was measured using a laser diffraction particle size distribution analyzer. Further, as a result of the observation using an SEM, 80 wt% or more of the particles were primary particles.

Next, while stirring the deagglomerated nickel-manganese composite hydroxide in water, an aqueous cobalt sulfate solution (concentration of 1 mol/L) and an aqueous sodium hydroxide solution (concentration of 1 mol/L) were dropped therein. The solid was separated from the obtained mixture, washed, and dried to give a nickel-manganese composite hydroxide with its surface covered with cobalt hydroxide (active material precursor) (precursor generation step). In the particles of the active material precursor obtained in this precursor generation step, the molar ratio of the total amount of nickel and manganese to cobalt was 93:7.

Furthermore, the active material precursor obtained in the precursor generation step was mixed with lithium carbonate ($Li_2CO_3$), so that, in the resultant mixture, the molar ratio of the total amount of metallic elements contained in the active material precursor (elements other than oxygen and hydrogen in the active material precursor) to lithium contained in lithium carbonate was 1:1.05.

The resultant mixture was calcined at 900°C for 10 hours in an air atmosphere (calcination step) to give a composite oxide (positive electrode active material No.4).

The composition of the positive electrode active material No.4 was $Li(Ni_{0.5}Mn_{0.5})_{0.93}Co_{0.07}O_2$.
As a result of analyzing concentration distribution of cobalt (element M) in the cross section of the particles in the positive electrode active material No.4 using an EPMA, the cobalt content Rs in the particle surface portion was 12 mol%, and the cobalt content Ri in the particle inner portion was 2 mol%. In other words, the cobalt content in the particle surface portion was higher than the cobalt content in the particle inner portion. Further, "Rs-Ri" representing the difference between Rs and Ri was 10.

Further, as a result of observation of this positive electrode active material No.4 using the SEM, 83 wt% of the particles were primary particles. The particle diameter of the positive electrode active material No.4 (primary particles) was 2 $\mu$m as the volume average particle diameter measured using the laser diffraction particle size distribution analyzer.

Further, the amount of cobalt contained in the positive electrode active material No.4 was 7 mol% of the total amount of the metallic elements contained in the positive electrode active material.

Then, a non-aqueous electrolyte secondary battery was produced in the same manner as in Example 1 except that the positive electrode active material No.4 was used.

Comparative Example 3

A nickel-cobalt-manganese composite hydroxide $((Ni_{0.5}Mn_{0.5})_{0.93}Co_{0.07})(OH)_2$ and NMP were mixed such that the weight ratio of the nickel-manganese composite hydroxide and NMP was 1:2. Then, the mixture was put in a planetary ball mill together with zirconia beads having a diameter of 2 mm, and pulverized and classified into primary particles (deagglomeration step).

The particles of the nickel-cobalt-manganese composite hydroxide obtained in this deagglomeration step had a volume average particle diameter of 2 $\mu$m, which was measured by a laser diffraction particle size distribution analyzer. Further, as a result of the observation using an SEM, 80 wt% or more of the particles were primary particles.

Next, the deagglomerated nickel-cobalt-manganese composite hydroxide and lithium carbonate were mixed. At that time, the molar ratio of the total amount of Ni, Mn, and Co of the composite hydroxide to lithium was 1:1.05.

Then, the resultant mixture was calcined at 900°C for 10 hours in an oxygen atmosphere to give a composite oxide (positive electrode active material No.5).

The composition of the positive electrode active material No.5 was $Li(Ni_{0.5}Mn_{0.5})_{0.93}Co_{0.07}O_2$.
As a result of analyzing concentration distribution of the elements in the cross section of the particles in the positive electrode active material No.5 using an EPMA, the cobalt (element M) content Rs in the particle surface portion and the cobalt content Ri in the particle inner portion were almost the same, and cobalt was uniformly dissolved in the particles.

Further, as a result of observation of this positive electrode active material No.5 using the SEM, 84 wt% of the particles were primary particles. The particle diameter of the positive electrode active material No.5 was 2 $\mu$m as the volume average particle diameter measured using the laser diffraction particle size distribution analyzer.

Then, a non-aqueous electrolyte secondary battery was produced in the same manner as in Example 1 except that the positive electrode active material No.5 was used.

Comparative Example 4

In the deagglomeration step of Comparative Example 3, the raw material and the conditions of pulverization and classification were adjusted, and a nickel-cobalt-manganese composite hydroxide $((Ni_{0.5}Mn_{0.5})_{0.93}Co_{0.07})(OH)_2$ made of secondary particles was produced. Then, the resultant nickel-cobalt-manganese composite hydroxide and lithium carbonate were mixed. At that time, the molar ratio of the total amount of Ni, Mn, and Co contained in the nickel-cobalt-manganese composite hydroxide to lithium was 1:1.05.

The resultant mixture was calcined at 900°C for 10 hours in an oxygen atmosphere to give a composite oxide (positive electrode active material No.6).

The composition of the positive electrode active material No.6 was $Li(Ni_{0.5}Mn_{0.5})_{0.93}Co_{0.07}O_2$.
As a result of analyzing concentration distribution of the elements in the cross section of the particles in the positive electrode active material No.6 using an EPMA, the cobalt (element M) content Rs in the particle surface portion was 7 mol%, and the cobalt content Ri in the particle inner portion was 7 mol%. In other words, the cobalt content in the particle surface portion and the cobalt content in the particle inner portion were almost the same (Rs-Ri=0), and cobalt was uniformly dissolved in the particles.

Further, as a result of observation of this positive electrode active material No.6 using an SEM, 99 wt% of the particles were secondary particles. The particle diameter of the positive electrode active material No.6 was 2 $\mu$m as the volume average particle diameter measured using a laser diffraction particle size distribution analyzer.

Then, a non-aqueous electrolyte secondary battery was produced in the same manner as in Example 1 except that the positive electrode active material No.6 was used.

Evaluation

Cycle characteristics and storage characteristics of the non-aqueous electrolyte secondary batteries obtained in Example 2 and Comparative Examples 3 and 4 were evaluated in the same manner as in the case of Example 1 and Comparative Examples 1 and 2. Table 2 shows the results together with the positive electrode active materials that were used and features thereof.

[Table 2]

| | | Positive electrode active material: $Li(Ni_{0.5}Mn_{0.5})_{0.93}Co_{0.07}O_2$ | Capacity rate [%] | Rate of increase in retention internal resistance $\Delta R$[%] |
|---|---|---|---|---|
| | No. | Details | | |
| Ex. 2 | No. 4 | Deagglomerated before precursor generation step Co content Particle surface portion > Particle inner portion | 92 | 11 |
| Comp. Ex. 3 | No. 5 | Deagglomerated before precursor generation step Co content Particle surface portion ≈ Particle inner portion | 90 | 25 |
| Comp. Ex. 4 | No. 6 | Not deagglomerated before precursor generation step Co content Particle surface portion ≈ Particle inner portion | 72 | 24 |

As shown in Table 2, the non-aqueous electrolyte secondary battery of Example 2 using the positive electrode active material No.4 (primary particles) in which the positive electrode active material is made of primary particles, and the cobalt content in the particle surface portion is higher than the cobalt content in the particle inner portion had favorable cycle characteristics and favorable storage characteristics, as with the case of Example 1.

Further, since the positive electrode active material No.4 of Example 2 has a positive electrode active material constituted by primary particles, even in the case where the positive electrode active material expanded and contracted during the charge/discharge cycles, it was possible to suppress the influence of the volume change of the positive electrode active material. Consequently, it seems that the capacity retention rate after the charge/discharge cycles was high.

Furthermore, in the positive electrode active material No.4 of Example 2, the cobalt content in the surface portion of the primary particles is higher than that in the inner portion thereof. By setting the cobalt content higher on the surface side of the positive electrode active material in this way, it is possible to suppress formation of a coating derived from the non-aqueous electrolyte on the surface of the positive electrode active material even in the case of storage in a high-temperature environment. Accordingly, it seems that an increase in the internal resistance of the battery during storage at a high temperature was suppressed, thereby improving the storage characteristics of the battery.

On the other hand, with the non-aqueous electrolyte secondary battery using the positive electrode active material No.5 of Comparative Example 3 in which although the positive electrode active material is constituted by primary particles, cobalt atoms are uniformly dissolved in the primary particles, the internal resistance after storage at a high temperature greatly increased. It seems that this is because when the battery was stored in a high-temperature environment, a coating derived from the non-aqueous electrolyte was formed on the surface of the positive electrode active material No.5, and consequently the lithium ion absorbing and desorbing capability was reduced, which increased the internal resistance of the battery.

Further, in Comparative Example 4, the battery was greatly deteriorated after the charge/discharge cycles and also after storage at a high temperature. In the positive electrode active material No.6 of Comparative Example 4, the positive electrode active material is made of secondary particles, and cobalt atoms are uniformly dissolved in the secondary particles. Since the positive electrode active material No.6 is constituted by secondary particles, it seems that separation of the primary particles (secondary particle crack) occurred due to expansion and contraction of the positive electrode active material during the charge/discharge cycles, which decreased the capacity retention rate after the cycles. Further, it seems that the cause of an increase in the internal resistance after storage is the formation of a coating derived from the non-aqueous electrolyte on the surface of the positive electrode active material, and consequently the lithium ion absorbing and desorbing capability was reduced, as with the case of Comparative Example 1.

In the examples, as the lithium composite metal oxide containing nickel, a lithium composite metal oxide containing nickel, cobalt, and aluminum, and a lithium composite metal oxide containing nickel, manganese, and cobalt were used as examples. However, the present invention is not limited to these, and a lithium composite metal oxide may have other elements other than the above elements.

Industrial Applicability

A positive electrode active material for a non-aqueous electrolyte secondary battery and a non-aqueous electrolyte secondary battery using this of the present invention can be used for usages such as, for example, the motor driving power source for hybrid electric vehicles (especially for plug-in hybrid electric vehicles) and the like, the driving power source for various portable electronic devices such as a mobile phone, a notebook personal computer, and a video camcorder, and a large power source for a home electric power storage apparatus.

Description of Reference Numerals

1    Positive electrode active material
2    Secondary particle
3    Primary particle
11   Positive electrode
12   Negative electrode
13   Separator
14   Positive electrode lead
15   Negative electrode lead
16   Upper insulating plate
17   Lower insulating plate
18   Battery case
19   Sealing plate
20   Positive electrode terminal

**Claims**

1. A positive electrode active material for a non-aqueous electrolyte secondary battery, comprising composite oxide particles comprising lithium, nickel, and an element M, said element M being at least one of aluminum and cobalt, wherein said composite oxide particles comprise primary particles,
   each particle of said primary particles comprises a surface portion and an inner portion,
   a content of said element M in said surface portion is higher than a content of said element M in said inner portion, and
   a proportion of said primary particles relative to all of said composite oxide particles is 80 to 100 wt%.

2. The positive electrode active material for a non-aqueous electrolyte secondary battery in accordance with claim 1, wherein said surface portion is a region where depth from the surface of said particle is 20% or less of a minimal diameter of said particle,
   said inner portion is a region where depth from the surface of said particle exceeds 20% of a minimal diameter of said particle,
   a content of said element M relative to all metallic elements other than lithium in said surface portion is Rs mol%,

a content of said element M relative to all metallic elements other than lithium in said inner portion is Ri mol%, and Rs-Ri representing a difference between said content Rs and said content Ri is 2 or more.

3. The positive electrode active material for a non-aqueous electrolyte secondary battery in accordance with claim 1, wherein said content Rs of said element M in said surface portion is 5 to 50 mol%.

4. The positive electrode active material for a non-aqueous electrolyte secondary battery in accordance with claim 1, wherein said content Ri of said element M in said inner portion is 40 mol% or less.

5. The positive electrode active material for a non-aqueous electrolyte secondary battery in accordance with claim 1, wherein said primary particles have a volume average particle diameter of 1 to 10 $\mu$m.

6. A method for producing a positive electrode active material for a non-aqueous electrolyte secondary battery, comprising the steps of:

mixing nickel-containing hydroxide particles comprising primary particles in a proportion of 80 to 100 wt%, an acidic solution comprising an element M, and a basic solution to generate an active material precursor comprising said nickel-containing hydroxide particles and a hydroxide comprising said element M adhering to the surface of each of said nickel-containing hydroxide particles, said element M being at least one of aluminum and cobalt; and
mixing said active material precursor and a compound comprising lithium, followed by calcination, to generate composite oxide particles comprising primary particles, each particle of said primary particles comprising a surface portion and an inner portion, a content of said element M in said surface portion being higher than a content of said element M in said inner portion.

7. A non-aqueous electrolyte secondary battery, comprising: a positive electrode; a negative electrode; a separator for separating said positive electrode and said negative electrode from each other; and a non-aqueous electrolyte, wherein said positive electrode includes the positive electrode active material for a non-aqueous electrolyte secondary battery in accordance with claim 1.

FIG. 1

FIG. 2

## INTERNATIONAL SEARCH REPORT

| International application No. |
|---|
| PCT/JP2010/001445 |

A.   CLASSIFICATION OF SUBJECT MATTER
*H01M4/525*(2010.01)i, *H01M4/36*(2006.01)i

According to International Patent Classification (IPC) or to both national classification and IPC

B.   FIELDS SEARCHED

Minimum documentation searched (classification system followed by classification symbols)
H01M4/00-4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>A | JP 2003-017055 A  (Toyota Central Research and Development Laboratories, Inc.), 17 January 2003 (17.01.2003), claims (Family: none) | 1-5,7<br>6 |
| X<br>A | WO 2007/114557 A1  (Industry-University Cooperation Foundation Hanyang University), 11 October 2007 (11.10.2007), claims; examples 1, 2, 4 & US 2009/0068561 A1     & KR 10-2007-0097923 A | 1-5,7<br>6 |
| X<br>A | JP 2001-196063 A  (Sumitomo Chemical Co., Ltd.), 19 July 2001 (19.07.2001), claims 3, 5; examples & US 6730435 B1          & EP 1096585 A2 & KR 10-2001-0040161 A   & CN 1294417 A | 1-5,7<br>6 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 May, 2010 (19.05.10) | 01 June, 2010 (01.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/001445 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X<br>A | JP 2003-059489 A  (Toyota Motor Corp.),<br>28 February 2003 (28.02.2003),<br>claims<br>(Family: none) | 1-5,7<br>6 |
| A | JP 2008-166269 A  (Toda Kogyo Corp.),<br>17 July 2008 (17.07.2008),<br>claims; examples<br>& US 2009/0272940 A     & EP 2104163 A1<br>& KR 10-2009-0086198 A   & CA 2672072 A | 6 |
| P,X | JP 2009-259798 A  (Panasonic Corp.),<br>05 November 2009 (05.11.2009),<br>claims; examples<br>& WO 2009/116284 A1 | 1-7 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003257427 A
- JP 2003068300 A